# EUROPEAN PATENT SPECIFICATION

(11) **EP 1 806 017 B1**
(45) Date of publication and mention of the grant of the patent: **25.07.2012**
(21) Application number: 04791417.1
(22) Date of filing: 15.10.2004
(51) Int. Cl.: H04W 52/02

(54) **REDUCTION OF POWER CONSUMPTION IN WIRELESS COMMUNICATION TERMINALS**
VERRINGERUNG DES STROMVERBRAUCHS IN DRAHTLOSEN KOMMUNIKATIONSENDGERÄTEN
REDUCTION DE LA CONSOMMATION D'ENERGIE DANS DES TERMINAUX DE COMMUNICATION SANS FIL

(43) Date of publication of application: 11.07.2007
(73) Proprietor: Nokia Corporation, 02150 Espoo (FI)
(72) Inventor: PIIPPONEN, Antti, FIN-33200 Tampere (FI); PÄRSSINEN, Aarno, FIN-02360 Espoo (FI)
(74) Representative: Söderholm, Sampsa Petteri
(86) International application number: PCT/FI2004/000617
(87) International publication number: WO 2006/040390

(56) References cited:
- US-A- 6 108 542
- US-A1- 2003 144 020
- US-A1- 2004 128 574
- US-B1- 6 498 926
- US-B1- 6 542 517

## Description

### Field of the Invention

The invention relates generally to the reduction of power consumption in wireless communication terminals. More particularly, the present invention concerns a mechanism for decreasing power consumption through control of receiver performance in wireless terminals.

### Background of the Invention

The current development towards truly mobile computing and networking has brought on the evolvement of various access technologies that also provide the users with access to the Internet when they are outside their own home network. At present, wireless Internet access is typically based on either short-range wireless systems or mobile networks, or both.

Short-range wireless systems have a typical range of one hundred meters or less. They often combine with systems wired to the internet to provide communication over long distances. The category of short-range wireless systems includes wireless personal area networks (PANs) and wireless local area networks (WLANs). They have the common feature of operating in unlicensed portions of the radio spectrum, usually either in the 2.4 GHz Industrial, Scientific, and Medical (ISM) band or in the 5 GHz unlicensed band.

Wireless personal area networks use low cost, low power wireless devices that have a typical range of about ten meters. The best-known example of wireless personal area network technology is Bluetooth, which uses the 2.4 GHz ISM band. It provides a peak air link speed of one Mbps, and power consumption low enough for use in personal, portable electronics such as PDAs and mobile phones. Wireless local area networks generally operate at higher peak speeds of 10 to 100 Mbps and have a longer range, which requires greater power consumption.

Wireless LAN systems are typically extensions of a wired network, providing mobile users with wireless access to the wired network. Examples of wireless local area network technology include the IEEE 802.11 a, which is designed for the 5 GHz unlicensed band, and uses orthogonal frequency division multiplexing (OFDM) to deliver up to 54 Mbps data rates; the 802.11 b, which is designed for the 2.4 GHz ISM band and uses direct sequence spread spectrum (DSSS) to deliver up to 11 Mbps data rates; and the HIPERLAN Standard, which is designed to operate in the 5 GHz unlicensed band.

In wireless LAN technology, two basic network topologies are available for network configuration: an ad-hoc network and an infrastructure network. An ad-hoc network is formed by two or more independent mobile terminals without the services of a base station, i.e. in an ad-hoc network the terminals communicate on a peer-to-peer basis. An ad-hoc network is normally formed for temporary purposes. The infrastructure network, in turn, comprises one or more wireless base stations, called access points, which form part of the wired infrastructure. In a typical network of this type, all traffic goes through the access points, regardless of whether the traffic is between two terminals or a terminal and the wired network, i.e. the mobile terminals do not communicate on a peer-to-peer basis. The mobile terminals are provided with wireless LAN cards, whereby they can access the wired network or set up an ad-hoc network. In an infrastructure network an access point and at least one terminal is said to form a Basic Serving Set (BSS), while an ad-hoc network is also termed an Independent BSS (IBSS).

So far, wireless LAN technology has been used mainly in laptop computers, which are typically AC powered, but which may also be used in battery mode that provides a fairly high battery capacity. To prolong the life of the batteries, the WLAN standards define a specific power save mode into which the terminals may enter from an active mode in order to decrease their power consumption. In this mode the WLAN-specific power consumption is very low, but the terminals have to wake up (i.e. enter the active mode) periodically to receive regular beacon transmissions broadcast in the network. The beacon transmissions indicate, for example, whether there are incoming packets buffered for a terminal. If so, the terminal retrieves the packets, goes back to sleep, and wakes up again to listen to the next beacon transmission.

The current WLAN power management has been designed assuming that the terminal devices are laptop type computers featuring a relatively high battery capacity. Along with the generalization of various other types of personal communication devices, such as intelligent phones, having a smaller size and thus also a lower battery capacity than laptop computers, power consumption has, however, become a critical issue when new properties are designed for wireless systems and terminals. Emerging ad-hoc mode applications in which power consumption may be rather high further aggravate the problem. Examples of such applications are games played in small groups or business meetings in which large files may be shared (wirelessly) by the participants.

Power consumption of the WLAN terminals has normally been reduced by trying to maximize the time the terminals spend in the power save mode. However, this does not affect the power consumption in the active mode, whose proportion of overall time, i.e. percentage of time in active mode, is on the increase along the generalization of new functionalities.

Document US 6,542,517 B1 generally deals with power savings in mobile terminals by operating a mobile terminal in two separate modes including a first mode suitable for receiving telephone calls and a second mode suitable for receiving pages only.

The present invention seeks to accomplish a solution by means of which the power consumption of a terminal may be reduced in the active mode of the terminal in a WLAN-like communication system provided with an uncoordinated media access mechanism, i.e. in a system where the terminals have to sense the common air medium prior to transmission to see whether the medium is free.

### Summary of the Invention

The present invention seeks to devise a new mechanism for decreasing power consumption in wireless terminals operating in wireless communication systems where a common channel is to be listened to prior to transmission to determine if the channel is free.

In the present invention, a terminal selects the device(s) with which it will communicate and controls the performance of its receiver in two different control modes, namely in a reception control mode intended for listening to the selected device(s) and in a media access control mode intended for sensing the common air medium prior to its own transmission.

The performance control is carried out in a manner allowing performance degradation to translate into reduced power consumption. Preferred methods for controlling the performance of the receiver include control of the dynamic range and/or the sensitivity of the receiver. The dynamic range here refers to the input power range over which the receiver produces a useful output. Sensitivity in turn refers generally to the ability of the receiver to detect (weak) signals, i.e. degraded sensitivity diminishes the area from which devices may be detected. The concept of dynamic range contains the concept of sensitivity, since the low end of the dynamic range is governed by sensitivity. The performance of the receiver may be degraded especially in the reception control mode, and the degradation can in turn be implemented so that power consumption is reduced in the transceiver.

The terminal thus selects the device(s) with which it communicates each time. In an ad-hoc network, the selected device(s) typically form a subset of all possible communicating peers in the same network. The terminal further measures a signal quality variable from at least one of the selected device(s), each signal quality variable being indicative of the quality of the signal received from respective device. The quality variable is typically indicative of the strength of the received signal. If no transmission to the selected device(s) is required, the performance of the receiver of the terminal may be adjusted based on the signal quality variable(s) obtained based on the said device(s) only. Thus, if transmission is not required, the terminal may restrict the operation range of its receiver according to the signal(s) received from the said device(s). This allows the terminal to receive with degraded performance, i.e. with reduced power consumption, but it may also make the devices outside this area so-called hidden nodes, i.e. nodes that cannot be detected. When transmission is approaching, the terminal readjusts the performance of its receiver so that it may detect, when sensing the common medium, all such devices whose traffic the upcoming transmission may disturb. In this way the terminal may ascertain that the hidden node problem is not aggravated.

Thus one embodiment of the invention is the provision of a method for decreasing power consumption in a wireless communication terminal. The method includes the steps of selecting at least one communication device as a communicating peer in a wireless communication system and measuring a signal quality variable from at least one of the at least one communication device selected in the selecting step, each signal quality variable being measured based on a signal received from a respective one of the at least one communication device selected in the selecting step, whereby at least one signal quality variable is obtained. The method further includes the steps of adjusting receiver performance based on at least one of the at least one signal quality variable obtained in the measuring step, the adjusting step being performed for reducing power consumption while ensuring reception of respective signals from the at least one communication device selected in the selecting step, monitoring if the wireless communication terminal's own transmission is approaching, and readjusting receiver performance for determining the availability of the common air medium at a performance level enabling detection of transmitting communication devices within a coverage area of said own transmission, the readjusting step being performed when the monitoring step indicates that said own transmission is approaching.

In another embodiment, the invention provides a wireless terminal for a wireless communication system where terminals are required to determine the availability of the common medium prior to transmission. The wireless terminal includes selection means for selecting at least one communication device as a communicating peer in the communication system and first measurement means for measuring a signal quality variable from at least one of the at least one communication device, each signal quality variable being measured based on a signal received from a respective one of the at least one communication device, whereby at least one signal quality variable is obtained. The wireless terminal further includes first performance control means for adjusting receiver performance based on at least one of the at least one signal quality variable, thereby to permit the wireless communication terminal to receive respective signals from the at least one communication device with reduced power consumption, monitoring means for monitoring if the wireless terminal's own transmission is approaching, and second performance control means for adjusting receiver performance to a performance level enabling the terminal to detect transmitting communication devices within a coverage area of said own transmission, the second performance control means being configured to operate when the monitoring means indicate that said own transmission is approaching.

In a still further embodiment, the invention provides a computer useable medium having computer readable program code embodied therein to control communication terminal. The computer readable program code includes a first computer readable program code portion for causing at least one communication device to be selected as a communicating peer for the wireless communication terminal and a second computer readable program code portion for causing the wireless communication terminal to adjust receiver performance based on a signal quality variable measured based on a signal received from at least one of the at least one wireless communication device. The computer readable program code further includes a third computer readable program code portion for causing the wireless communication terminal to generate an indication when transmission is approaching and a fourth computer readable program code portion for causing the wireless communication terminal to adjust receiver performance to a level enabling the wireless communication terminal to detect transmitting communication devices within a coverage area of said own transmission, the fourth computer readable program code portion operating in response to the indication that said own transmission is approaching.

Since in a typical case the terminal has only one or at most a few communicating peers which are close to it, the performance of the receiver may be lowered significantly during listening periods. This in turn translates to significant power savings. Furthermore, the performance of the receiver may be degraded without aggravating the known hidden node problem that may lead to simultaneous transmissions (collisions) and to reduced throughput.

Other features and advantages of the invention will become apparent through reference to the following detailed description and accompanying drawings.

### Brief Description of the Drawings

In the following, the invention and many of its embodiments are described more closely with reference to the examples shown in FIG. **1** to **8** in the appended drawings, wherein:
FIG. **1** illustrates a typical communication system according to the invention;
FIG. **2** illustrates the MAC entity utilized in IEEE 802.11 networks;
FIG. **3** is a flow diagram illustrating one embodiment of the control mechanism of the invention;
FIG. **4** is a flow diagram illustrating another embodiment of the control mechanism of the invention;
FIG. **5** is a block diagram illustrating one embodiment of the control mechanism of the invention in a terminal;
FIG. **6** is a flow diagram illustrating one embodiment of a control mechanism for controlling the performance of the receiver in the reception control mode;
FIG. **7** is a flow diagram of a further embodiment of the invention; and
FIG. **8** illustrates one embodiment of a terminal according to the invention.

### Detailed Description of the Invention

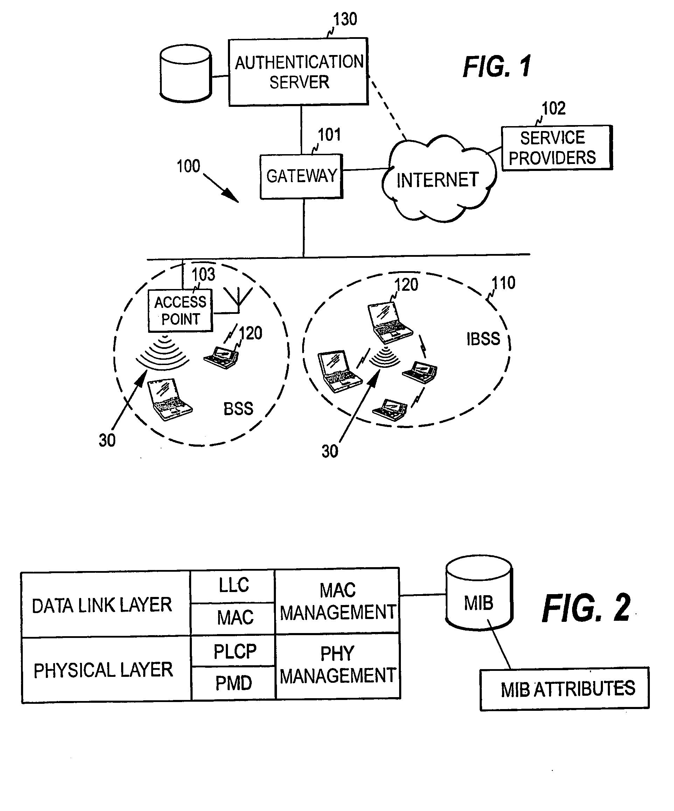

FIG. **1** illustrates a typical WLAN communication system. The system includes one or more WLAN networks **100**, each connected by means of a gateway **101** (a router) to another network, such as the Internet, which contains service providers **102**. Each WLAN network comprises one or more access points **103**, each communicating wirelessly with the terminals within the coverage area, i.e. the cell, of the access point and thus forming a bridge between the terminals and the wired network.

As mentioned above, in an infrastructure network an access point and at least one terminal is said to form a Basic Service Set (BSS). A series of BSSs then forms an Extended Service Set (ESS). These BSSs are connected to each other by a Distribution System (DS), which can be a wired network, such as an Ethernet LAN, within which TCP/IP packets are transmitted, or a wireless network, or a combination of these two. However, the basic type of an IEEE 802.11 LAN is an Independent BSS (IBSS), which consists of two or more terminals. The terminals of an IBSS form an ad-hoc network **110**.

The terminals of the invention are typically short-range wireless communication terminals, which may be based, for example, on the IEEE 802.11 standards for wireless local area networking. The terminals may be portable computers, PDA equipment, intelligent phones or other such mobile terminals **120**. In the same way as an ordinary GSM telephone, the user-operated terminals may be made up of two parts: the actual subscriber device and an identity module, whereby from the viewpoint of the network the subscriber device becomes a functioning terminal only when the identity module has been inserted into it. The identity module may be a (Universal) Subscriber Identity Module ((U)SIM), User Identity Module (UIM) or a (User) Integrated Circuit Card ((U)ICC), for example. However, the terminals may equally well be traditional WLAN terminals in which no identity modules are used.

The system further typically contains an authentication server **130** of the WLAN network. The authentication server is connected to the above-mentioned gateway through a secured connection, which is typically a TCP/IP connection established through an operator network or through the Internet. As shown in the figure, in an infrastructure network the access points broadcast beacon messages **30**, while in an ad-hoc network the terminals share this responsibility.

As the present invention does not relate to the architecture of the WLAN system, it is not discussed in more detail here.

In a communication system as described in FIG. **1**, the terminals have to sense the medium before they can transmit, to ascertain that the medium is idle. For this purpose, the IEEE 802.11 standards include a Carrier Sense Multiple Access/Collision Avoidance (CSMA/CA) media access control (MAC) protocol to avoid simultaneous transmissions (i.e. collisions). A common problem related to an environment like this is the so-called hidden node problem, which occurs when two nodes can communicate with a third node but cannot communicate with each other due to a large distance, obstacles, etc. For example, a terminal may access the medium since it cannot hear another terminal which is currently communicating with an access point or a third terminal. In the present invention, power consumption is decreased through degradation of receiver performance without aggravating the hidden node problem.

The IEEE 802.11 standards define the physical layer options and the MAC layer protocol for the wireless LAN. FIG. **2** illustrates the protocol architecture of the IEEE 802.11 standard. As shown in the figure, the actual MAC protocol operates in the lower sub-layer of the second layer of the OSI layer model, which is the Data Link Layer (DLL). The MAC management layer is responsible for the overall management of the MAC layer. It supports the association and roaming functionalities and controls the power saving functions, the authentication and encryption mechanisms, and synchronization of the terminals, for example. The MAC management layer further maintains a MAC layer management database, i.e. the MIB (Management Information Base) of the MAC layer. The MAC layer cooperates with the physical management layer to maintain the database. An example of the MAC layer attribute that may be utilized in the performance control mechanism of the invention is RSSI (Received Signal Strength Indicator), which indicates the level of the received signal. Alternatively, received signal strength may be defined internally in the physical layer implementation and used for the control mechanism of the invention without any connection to MAC protocols.

The physical layer is divided into two sub-layers, which are the PLCP (Physical Layer Convergence Protocol) sub-layer and the PMD (Physical Medium Dependent) sub-layer. The purpose of the PLCP is to provide minimum dependence on the PMD in order to simplify the interface between the physical layer and the MAC layer.

As discussed above, the performance of the receiver may be controlled by controlling its sensitivity or dynamic range. As these methods require slightly different measurements in the terminal, they are discussed separately below.

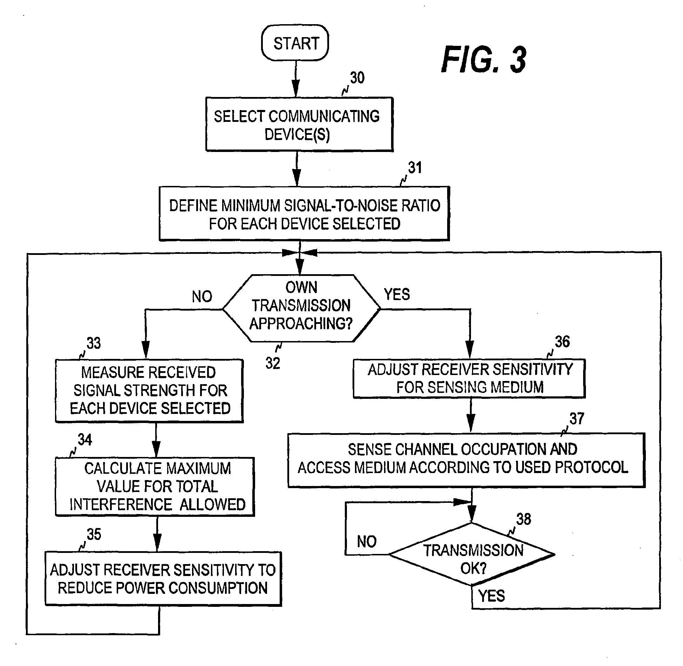

FIG. 3 is a flow diagram illustrating one embodiment of the performance control mechanism in a wireless communication terminal. In this embodiment, the performance control is carried out by controlling the sensitivity of the receiver. When operating in a network, such as a WLAN network, where terminals contend for the common air medium, the terminal first forms a dedicated communication group for itself by selecting one or more devices with which it needs to communicate and by establishing a communication link with each of the said devices (step **30**). In an infrastructure network, only a neighboring access point is selected, while in an ad-hoc network the terminal may select one or more other terminals. The selection may be performed in various ways depending on the system involved. For example, the terminal may automatically detect the devices in the same network and present a list of the detected devices to the user, whereby the user may select the device(s) with which communication is preferred. The terminal may also include a prestored list of the devices in whose proximity the method of the invention is automatically initiated.

The terminal then defines a minimum signal-to-noise ratio for each of the selected devices, i.e. for each link (step **31**). This is performed based on the link parameters to be used, such as the rate of the received data. If the link parameters to be used are not known, the minimum signal-to-noise ratio is defined assuming the worst case, i.e. the case in which the signal-to-noise ratio requirement is the highest possible. Furthermore, a performance or safety margin is defined for each minimum value in order to guarantee reliable transmission over the link.

The terminal then decides whether the reception control mode or the media access control mode is to be entered. The decision is made based on whether or not the terminal needs to transmit soon (step **32**).

If the terminal does not have to transmit but may stay in a listening mode, the received signal strength is measured for each link to be listened to. The measured signal strength represents the average level of the signal input to the receiver of the terminal from the link in question (step **33**).

Based on the minimum signal-to-noise ratio, the associated performance margin, and the measured signal strength, the terminal then estimates the amount of maximum allowable total interference for each link separately (step **34**). The ratio of the measured signal strength to the maximum allowable total interference then corresponds to a signal-to-noise ratio that exceeds the minimum signal-to-noise ratio by the said performance margin. The total interference here refers to receiver-originated interference, i.e. noise plus other unwanted components generated in the receiver.

Based on the estimation, the receiver sensitivity may then be degraded in order to reduce the reception power needed in the terminal (step **35**). In other words, by degrading the sensitivity of the receiver the power consumption of the receiver is reduced to a lower value in view of the signal-to-noise ratio required. If the selected devices are to be listened to simultaneously, the sensitivity value is determined by the link with the tightest sensitivity requirement, i.e. the link for which the amount of maximum allowable total interference is the smallest. However, if the terminal can listen to each selected device in a dedicated time window, the sensitivity value for a time window is determined by the link in question, and the sensitivity is changed to a new link-specific value when the link to be listened to is changed. In this respect the operation thus depends on the network in question.

Since the local area networks are quite stable in short time periods, it is possible to degrade the sensitivity of the receiver based on the received signal strength value(s) measured from the device(s) with which communication is needed. If there are two or more such devices, the interference level requirement is defined separately for each device (link). However, the number of sensitivity levels used during listening periods depends on how many and which of the selected devices have to be listened to simultaneously.

In the above-described manner the terminal thus restricts the operation range of its receiver to correspond to the area covered by the selected device(s), which may make the devices outside this area hidden nodes. However, this is not detrimental to the operation of the system since the terminal has only been receiving so far.

When an own transmission is imminent, an indication of the need to transmit is generated and submitted to the process of the invention. As a result, the terminal enters the media access control mode in order to make all such devices "unhidden", which might be disturbed by the upcoming transmission (step **32**/yes). The indication may be obtained, for example, from the transmission buffers when the transmitter starts to assemble a packet or frame to be transmitted. In the media access control mode, the receiver sensitivity is adjusted so that the terminal is able to detect all nodes with which a collision might occur in the upcoming transmission phase, i.e. the terminal makes all such nodes "unhidden". In one embodiment, receiver sensitivity is adjusted to a maximum value (step **36**) in order to minimize the risk of hidden nodes. The channel occupation is then sensed and the medium is accessed according to the medium access protocol used in the system in question (step **37**). In IEEE 802.11 networks, for example, the Carrier Sense Multiple Access/Collision Avoidance (CSMA/CA) media access protocol is used to share a common channel.

The transmission power may be adjusted according to the link in question. When the transmission has been completed successfully, the process returns to adjust the receiver sensitivity for the listening mode (steps **33** to **35**).

In another embodiment of the invention, the sensitivity of the receiver is not adjusted to a maximum value at step **36**, but to a lower value that depends on the link in question. Depending on the link parameters, the terminal may first define a transmission power value sufficient for that link. A propagation path loss model may be used to estimate the area within which the upcoming transmission may disturb other devices. The sensitivity of the receiver may then be adjusted to a level sufficient to detect all (transmitting) nodes within that area, i.e. in a cell in which the upcoming transmission may cause interference.

The above sensitivity control allows several very small cells to be formed, which do not interfere with each other and which do not disturb the operation of the access point. For example, several laptop/handset pairs may operate simultaneously without disturbing each other.

The group of communicating devices may be updated during the operation of the terminal. For example, the terminal may receive an indication that one of the selected devices enters or has entered sleep mode. If this link has been the one determining the sensitivity of the receiver, the sensitivity is changed according to the requirements of the rest of the selected devices. Furthermore, new devices may join the network and the terminal may select one or more of them to its communication group.

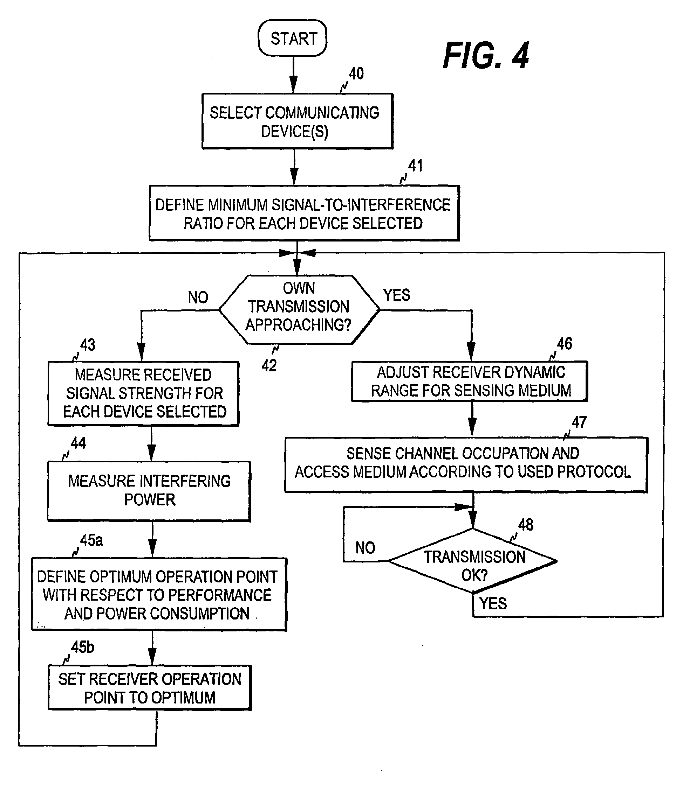

As discussed above, the power consumption of the transceiver may also be reduced by controlling the dynamic range of the receiver. FIG. **4** is a flow diagram illustrating one embodiment of the control mechanism for controlling the dynamic range of the receiver. The embodiment of FIG. **4** corresponds to that of FIG. **3**, but in the two control modes discussed above the terminal controls the dynamic range of the receiver. In the reception control mode, the terminal measures the received signal strength for each link to be listened to (step **43**), as in step **33** above. The terminal then measures the amount of interfering power indicative of the amount of external interference received by the receiver (step **44**). In this embodiment, interference from outside interferers is thus taken into account.

The measured interfering power may be indicative of the total blocking power, i.e. the total power entering the active parts of the receiver, intermodulation power, or the power of an adjacent channel. Based on the minimum signal-to-interference ratio defined in step **41**, the associated performance margin, the measured signal strength, and the measured power value(s), the terminal then defines an optimum operation point with respect to performance and power consumption (step **45a**), and sets the operation point to said optimum value (step **45b**). The term operation point here refers generally to the internal transceiver settings yielding the desired dynamic range and power consumption. As discussed below, the settings may involve supply voltage settings and/or bias current settings, for example.

When the media access control mode is accessed, the terminal adjusts the dynamic range of the receiver to a maximum value (step **46**) or to a lower value sufficient to detect all (transmitting) nodes within the area in which the upcoming transmission may cause interference. As in the case of sensitivity control, the transmission determined for the upcoming transmission may be used in defining said lower value.

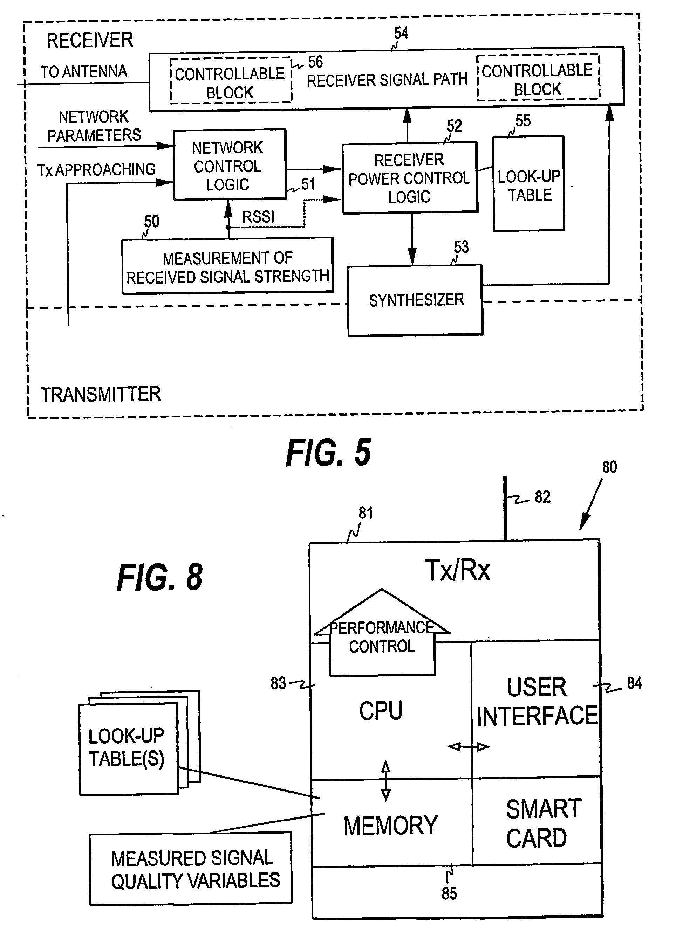

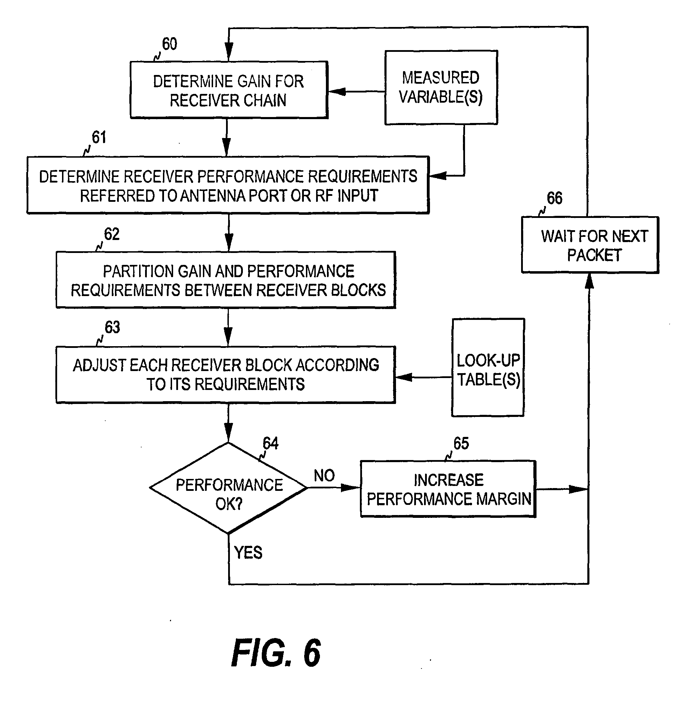

FIG. **5** is a block diagram illustrating one embodiment of the implementation of the performance control in a terminal. A measurement block **50** handles the measurement of the signal strength and supplies the measured value, such as RSSI, to a network control logic block **51**, which calculates the maximum noise/interference allowed for the selected links. The network control logic may also receive other network parameters needed in the control process, such as the data rate used in the network. The calculated data is supplied to a receiver power control logic block **52**, which defines the internal control measures to be taken to change the sensitivity or the dynamic range of the receiver so that reduced power consumption is achieved. The receiver power control logic block then controls the components in the receiver signal path **54** to obtain the desired sensitivity or dynamic range coupled with the desired power consumption. The receiver power control logic block may also control the synthesizer **53** of the transceiver, which also contains power consuming components. The indication of an approaching transmission may be given to the network control logic block, for example, which then controls the receiver power control logic to assume the media access control mode. The receiver may also be divided into controllable blocks **56**. Each of the blocks may be controlled separately, as discussed below in connection with FIG. **6**.

The receiver power control logic block may be provided with one or more look-up tables **55** which map the needed change in the sensitivity or dynamic range to the internal control mechanism to be used. It is also possible that the measured signal strength value is mapped directly to the internal control mechanism in the look-up table. Therefore, the measured signal strength value may also be supplied directly to the receiver power control logic, as indicated by a dashed arrow in the figure. The internal control mechanism thus indicates the operation points discussed above.

The sensitivity or the dynamic range of the receiver may be controlled in various ways depending on the structure of the receiver. Different blocks in the receiver signal path may be controlled to achieve the desired level of sensitivity or dynamic range coupled with desired power consumption. For example, the gain of a low-noise front-end amplifier (LNA) and/or the resolution of an analog-to-digital converter may be controlled. Circuit-level power save mechanisms that may be utilized in the present invention are described in U.S. Patent Applications US2003/0124999 A1 and US2003/0078007 A1. Generally, receiver power consumption may be reduced in a great number of ways. To give examples, power consumption may be controlled by changing various biasing currents or supply voltages in the receiver, by-passing one or more of the receiver stages, selecting a signal path with a lower/higher power consumption, and/or shutting down components with high power consumption. Especially the control of bias currents and the selection of different signal paths are effective techniques for reducing power consumption. The measurements needed for the control may be made either with analog domain power detectors or with digital measurement structures. They provide the necessary information to the control logic that steers the power consumption of receiver blocks.

FIG. 6 illustrates one embodiment of a control mechanism for controlling the performance of the receiver in the reception control mode. In this embodiment, the variable(s) measured based on received packets are first used to determine the gain of the receiver chain (step **60**) and other receiver performance requirements referred to the antenna port or the RF input of the terminal (step **61**). As discussed above, the variable(s) to be measured depend on whether sensitivity or dynamic range is controlled. In both embodiments, the received signal strength is measured, and the interfering power is additionally measured in the case of dynamic range control. The receiver is divided into several controllable blocks and the gain and receiver requirements are then partitioned between different receiver blocks at step **62**. Each receiver block may then be controlled according to its requirements (step **63**). The internal control information may again be retrieved from one or more look-up tables, for example. Each controllable block may include one or more low-noise amplifiers, down-conversion mixers, baseband or IF amplifiers, analog-to-digital converters, local oscillator buffers, or voltage controlled oscillators. As discussed above, the synthesizer of the transceiver may also be controlled to reduce power consumption.

The terminal then checks if the set performance level is sufficient, i.e. if packets are received correctly (step **64**). If this is the case, the terminal waits for the next packet (step **66**) and repeats the above steps, i.e. measures the variables and controls the different receiver blocks according to their requirements. If the performance is not sufficient, the terminal increases the performance margin (step **65**) and waits for the next packet before repeating the above steps.

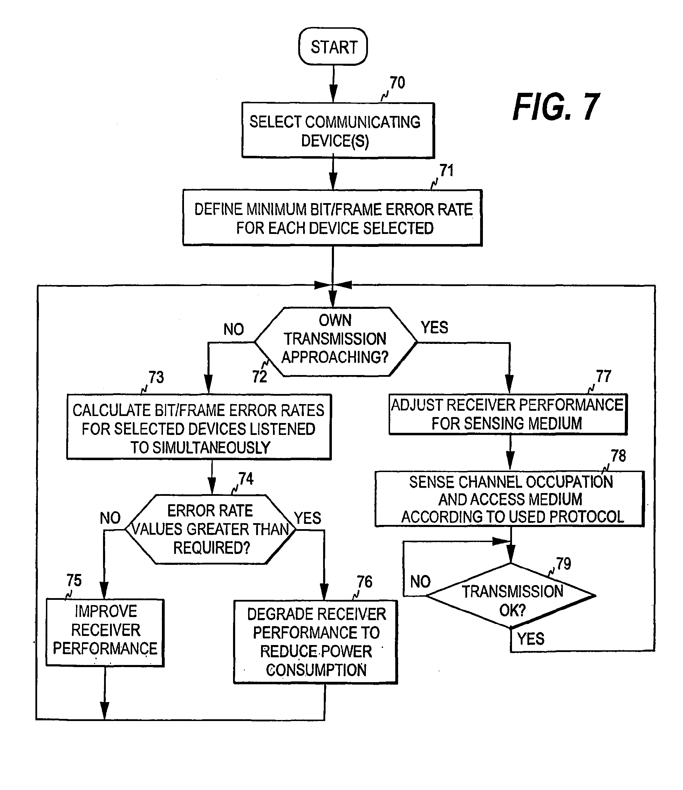

FIG. **7** illustrates an embodiment of the invention, in which error rate is used as the signal quality variable measured from the selected device(s). In this embodiment, a minimum bit or frame error rate is defined for each of the selected devices, i.e. for each link (step **71**). In the reception control mode, the terminal then calculates the bit or frame error rate value for those selected devices that are to be listened to simultaneously (step **72**). If the calculated error rates are greater than the corresponding minimum values, the performance of the receiver, such as receiver sensitivity, may be degraded to reduce power consumption (step **76**). The performance may be degraded based on the device, whose error rate is closest to the respective minimum value. If any of the error rate values is below the corresponding minimum value, the performance of the receiver is improved (step **75**). The media access control mode is similar to that discussed in connection with FIG. **3**.

FIG. **8** illustrates the basic elements of the mobile terminal according to one embodiment of the invention. The mobile terminal **80** comprises a transceiver **81** provided with at least one antenna **82**, a control unit **83**, user interface means **84** for creating a user interface through which the user can operate the terminal, and memory means **85**, which may include one or more smart cards **86**, such as one of the above-mentioned identity modules. However, as discussed above, an identity module is not included in a traditional WLAN terminal. The control unit performs the above-described control functions of the invention, i.e. it contains the control logic blocks shown in FIG. **5** and controls the transceiver as shown by an arrow in the figure. The memory means include the MAC MIB or a similar database, which may include the control information needed for the performance control, such as the measured signal strength or error rate values, and the look-up table(s) indicating the internal control operations for controlling the performance and the power consumption according to the measured signal quality variables. The control unit obtains the signal quality variables from the transceiver and stores them in the memory.

The data processing environment of the control unit may resemble that of an ordinary PC, and if an existing wireless terminal is provided with suitable interfaces for receiver sensitivity control, the control mechanism of the invention may be introduced separately into an existing terminal, for example in a multimedia card. It is also possible that the control mechanism, i.e. the program code that causes the control unit to control the performance of the receiver in the above-described manner, is delivered as a separate plug-in software module which may be downloaded to the terminal via the network.

The above-described embodiments for controlling the sensitivity and the dynamic range of the receiver may also be combined so that sensitivity is controlled when there are no strong external interferers and dynamic range is controlled when such interferers exist in the neighborhood of the terminal.

Although the invention was described above with reference to the examples shown in the appended drawings, it is obvious that the invention is not limited to these, but may be modified by those skilled in the art without departing from the scope and spirit of the invention. As discussed above, the invention may be utilized in any networks in which a media access control mechanism includes a function resembling the IEEE 802.11 Distributed Coordination Function (DCF). The invention may therefore also be used in systems having a centralized media access control, if the centralized control is not used unceasingly. Furthermore, different physical transmission techniques, such as Ultra Wide-Band (UWB) or Bluetooth, may be used in such networks. The performance of the receiver may also be controlled in any manner allowing performance degradation to be implemented so that transceiver power consumption is reduced.

## Claims

1. A method for decreasing power consumption in a wireless communication terminal (120), the method comprising the steps of:
- selecting (30) at least one communication device as a communicating peer in a wireless communication system;
- measuring (33) a signal quality variable from at least one of the at least one communication device selected in the selecting step, each signal quality variable being measured based on a signal received from a respective one of the at least one communication device selected in the selecting step, whereby at least one signal quality variable is obtained;
- adjusting (35) receiver performance based on at least one of the at least one signal quality variable obtained in the measuring step, the adjusting step being performed for reducing power consumption while ensuring reception of respective signals from the at least one communication device selected in the selecting step;
- monitoring (32) if the wireless communication terminal's (120) own transmission is approaching; and
- readjusting (36) receiver performance for determining availability of a common air medium at a performance level enabling detection of transmitting communication devices within a coverage area of said own transmission, the readjusting step being performed when the monitoring step indicates that said own transmission is approaching.

2. A method according to claim **1**, wherein the adjusting and readjusting steps (33, 36) include adjusting receiver sensitivity.

3. A method according to claim **1**, wherein the measuring step (33) includes measuring the signal quality variable from each of the at least one communication device, and wherein each signal quality variable measured is indicative of signal strength received from the corresponding communication device.

4. A method according to claim **3**, further comprising a step of determining a device-specific signal-to-noise-ratio for each of the at least one communication device, each device-specific signal-to-noise-ratio indicating a signal-to-noise ratio value required to listen to the communication device concerned.

5. A method according to claim **4**, further comprising a step of defining a maximum amount of receiver noise allowed for each of the at least one communication device, wherein the maximum amount of receiver noise allowed for a communication device is defined based on the minimum signal-to-noise-ratio determined for that device in the determining step and on the received signal strength measured for that device in the measuring step.

6. A method according to claim **5**, wherein the selecting step (30) includes selecting a plurality of communication devices.

7. A method according to claim **6**, further comprising a step of choosing one of the plurality of communication devices, the choosing step being performed based on the maximum amount of receiver noise defined for the at least one communication device in the defining step.

8. A method according to claim **7**, wherein the adjusting step (35) includes adjusting the receiver sensitivity based on the chosen communication device only, the adjusting being performed for listening to said plurality of communication devices.

9. A method according to claim **6**, wherein the adjusting step (35) includes adjusting receiver sensitivity based on one of the plurality of communication devices at a time.

10. A method according to claim **2**, wherein the readjusting step (36) includes maximizing receiver sensitivity.

11. A method according to claim **1**, further comprising a step of determining transmission power for said own transmission.

12. A method according to claim **11**, wherein the readjusting step (36) includes a sub-step of determining receiver sensitivity based on the transmission power determined.

13. A method according to claim **12**, further comprising the steps of:
- determining the availability of the common air medium using the sensitivity determined in the determining sub-step; and
- performing said own transmission.

14. A method according to claim **1**, further comprising a step of defining interfering power received in the communication terminal (120), the interfering power being indicative of a level of interference caused by external interferers.

15. A method according to claim **14**, wherein the adjusting and readjusting steps include adjusting the dynamic range of the receiver.

16. A method according to claim **14**, wherein the defining step includes defining the total co-channel power.

17. A method according to claim **14**, wherein the defining step includes defining the intermodulation power.

18. A method according to claim **14**, wherein the defining step includes defining the power of an adjacent channel.

19. A method according to claim **15**, further comprising a step of determining a device-specific signal-to-interference-ratio for each of the at least one communication device, each device-specific signal-to-interference-ratio indicating a signal-to-interference ratio value required to listen to the communication device concerned.

20. A method according to claim **19**, wherein the adjusting step includes adjusting the dynamic range based on the interfering power defined in the defining step and on the device-specific signal-to-interference ratio of one of the at least one communication device.

21. A method according to claim **1**, wherein the selecting step (30) includes selecting an access point as the communicating peer.

22. A method according to claim **1**, wherein the selecting step (30) includes selecting at least one other wireless communication terminal as the communicating peer.

23. A method according to claim **4**, wherein the determining step includes determining the device-specific signal-to-noise ratio for each of the at least one communication device by calculating a minimum signal-to-noise ratio for each of the at least one wireless communication device and adding a predetermined safety margin to the minimum signal-to-noise ratio.

24. A method according to claim **19**, wherein the determining step includes determining the device-specific signal-to-interference ratio for each of the at least one communication device by calculating a minimum signal-to-interference ratio for each of the at least one wireless communication device and adding a predetermined safety margin to the minimum signal-to-interference ratio.

25. A method according to claim **1**, wherein the adjusting step (35) includes at least one operation from a group including reduction of a biasing current, reduction of a supply voltage, and by-pass of a selected receiver stage.

26. A method according to claim **1**, wherein the adjusting step (35) includes a sub-step of controlling several receiver blocks, each block being controlled separately.

27. A method according to claim **26**, wherein the controlling sub-step includes retrieving control information for each block from a look-up table (55).

28. A method according to claim **26**, wherein the controlling sub-step includes calculating control information in order to minimize power consumption.

29. A method according to claim **1**, wherein the measuring step (33) includes measuring the signal quality variable from each of the at least one communication device, and wherein each signal quality variable is indicative of an error rate of a signal received from the corresponding communication device.

30. A wireless communication terminal (120) for a wireless communication system, the wireless communication terminal (120) comprising:
- selection means (51, 83) for selecting at least one communication device as a communicating peer in the communication system;
- first measurement means (50) for measuring a signal quality variable from at least one of the at least one communication device, each signal quality variable being measured based on a signal received from a respective one of the at least one communication device, whereby at least one signal quality variable is obtained;
- first performance control means (52, 83) for adjusting receiver performance based on at least one of the at least one signal quality variable, thereby to permit the wireless communication terminal (120) to receive respective signals from the at least one communication device with reduced power consumption;
- monitoring means (51, 83) for monitoring if the wireless communication terminal's (120) own transmission is approaching; and
- second performance control means (52, 83) for adjusting receiver performance to a performance level enabling the terminal (120) to detect transmitting communication devices within a coverage area of said own transmission, the second performance control means being (52, 83) configured to operate when the monitoring means (51, 83) indicate that said own transmission is approaching.

31. A wireless communication terminal (120) according to claim **30**, wherein the first and second performance control means (52, 83) are configured to control receiver sensitivity.

32. A wireless communication terminal (120) according to claim **31**, wherein the at least one signal quality variable is indicative of signal strength.

33. A wireless communication terminal (120) according to claim **32**, further comprising calculation means (51, 83) for calculating a device-specific signal-to-noise-ratio for each of the at least one communication device, each device-specific signal-to-noise-ratio indicating a signal-to-noise ratio value required to listen to the communication device concerned.

34. A wireless communication terminal (120) according to claim **33**, wherein the first performance control means (52, 83) are configured to define a maximum amount of receiver noise allowed for each of the at least one communication device based on the device-specific signal-to-noise ratio determined for that device and on the received signal strength measured for that device.

35. A wireless communication terminal (120) according to claim **31**, wherein the first performance control means are further configured to choose one of the at least one communication device and to adjust receiver sensitivity based on the maximum amount of receiver noise allowed for that device.

36. A wireless communication terminal (120) according to claim **31**, wherein the second performance control means (52, 83) are configured to maximize the receiver sensitivity if the wireless communication terminal's (120) own transmission is approaching.

37. A wireless communication terminal (120) according to claim **31**, wherein the second performance control means (52, 83) are configured to determine receiver sensitivity based on transmission power defined for said own transmission.

38. A wireless communication terminal (120) according to claim **30**, wherein the first performance control means (52, 83) are provided with a look-up table (55) indicating internal control measures to be taken.

39. A wireless communication terminal (120) according to claim **30**, wherein the second performance control means (52, 83) are provided with a look-up table (55) indicating internal control measures to be taken.

40. A wireless communication terminal (120) according to claim **30**, further comprising second measurement means for measuring interfering power received in the communication terminal (120), the interfering power being indicative of a level of interference caused by external interferers.

41. A wireless communication terminal (120) according to claim 40, wherein the first and second performance control means (52, 83) are configured to control the receiver dynamic range.

42. A wireless communication terminal (120) according to claim 41, wherein the first performance control means (52, 83) are further configured to choose one of the at least one communication device and to adjust the dynamic range based on the interfering power and the signal quality variable corresponding to the chosen device.

43. A wireless communication terminal (120) according to claim 30, wherein the at least one signal quality variable is indicative of an error rate of a signal measured from the corresponding communication device.

44. A computer useable medium (85) having computer readable program code embodied therein to control a wireless communication terminal (120), the computer readable program code comprising:
- a first computer readable program code portion for causing at least one communication device to be selected as a communicating peer for the wireless communication terminal (120);
- a second computer readable program code portion for causing the wireless communication terminal (120) to adjust receiver performance based on a signal quality variable measured based on a signal received from at least one of the at least one wireless communication device;
- a third computer readable program code portion for causing the wireless communication terminal (120) to generate an indication when the wireless communication terminal's (120) own transmission is approaching; and
- a fourth computer readable program code portion for causing the wireless communication terminal (120) to adjust receiver performance to a level enabling the wireless communication terminal (120) to detect transmitting communication devices within a coverage area of said own transmission, the fourth computer readable program code portion operating in response to the indication that said own transmission is approaching.

## Patentansprüche

1. Verfahren zum Verringern eines Stromverbrauchs in einem drahtlosen Kommunikationsendgerät (120), wobei das Verfahren die Schritte umfasst:
- Auswählen (30) mindestens einer Kommunikationsvorrichtung als ein kommunizierender Teilnehmer im einem drahtlosen Kommunikationssystem;
- Messen (33) einer Variablen einer Signalqualität von mindestens einer der mindestens einen Kommunikationsvorrichtung, die in dem Auswahlschritt ausgewählt wurde, wobei jede Variable der Signalqualität auf Grundlage eines Signals gemessen wird, das von einer jeweiligen der mindestens einen Kommunikationsvorrichtung empfangen wurde, die in dem Auswahlschritt ausgewählt wurde, wobei mindestens eine Variable der Signalqualität erhalten wird;
- Einstellen (35) einer Empfängerleistung basierend auf mindestens einer der mindestens einen Variablen der Signalqualität, die in dem Messschritt erhalten wurde, wobei der Einstellschritt ausgeführt wird, um einen Stromverbrauch zu verringern während ein Empfang der jeweiligen Signale von der mindestens einen Kommunikationsvorrichtung sichergestellt wird, die in dem Auswahlschritt ausgewählt wurde;
- Überwachen (32), ob eine eigene Sendung des drahtlosen Kommunikationsendgeräts (120) bevorsteht, und
- Nachstellen (36) der Empfängerleistung, um eine Verfügbarkeit eines gemeinsamen Funkmediums zu bestimmen, bei einen Leistungsniveau, das ein Erfassen von sendenden Kommunikationsvorrichtungen innerhalb einer Reichweite der eigenen Sendung ermöglicht, wobei der Nachstellschritt ausgeführt wird, wenn der Überwachungsschritt angibt, dass die eigene Sendung bevorsteht.

2. Verfahren gemäß Anspruch 1, wobei die Einstell- und Nachstellschritte (33, 36) ein Einstellen der Empfängerempfindlichkeit einschließen.

3. Verfahren gemäß Anspruch 1, wobei der Messschritt (33) das Messen der Variablen der Signalqualität von jeder der mindestens einen Kommunikationsvorrichtung einschließt, und wobei jede der gemessenen Variablen der Signalqualität eine Signalstärke angibt, die von der entsprechenden Kommunikationsvorrichtung empfangen wurde.

4. Verfahren gemäß Anspruch 3, weiter umfassend einen Schritt des Bestimmen eines vorrichtungsspezifischen Signal/Rauschverhältnisses für jede der mindestens einen Kommunikationsvorrichtung, und wobei jedes der vorrichtungsspezifischen Signal/Rauschverhältnisse einen Signal/Rauschverhältniswert angibt, der erforderlich ist, um die betreffende Kommunikationsvorrichtung zu empfangen.

5. Verfahren gemäß Anspruch 4, weiter umfassend einen Schritt des Definierens eines Maximalbetrags des Empfängerrauschens, der für jede der mindestens einen Kommunikationsvorrichtung gestattet ist, wobei der Maximalbetrag des Empfängerrauschens, der für jede der mindestens einen Kommunikationsvorrichtung gestattet ist, auf Grundlage des minimalen Signal/Rauschverhältnisses, das in dem Bestimmungsschritt für diese Vorrichtung bestimmt wurde und auf der empfangenen Signalstärke, die für die Vorrichtung in dem Messschritt gemessen wurde, definiert wird.

6. Verfahren gemäß Anspruch 5, wobei der Auswahlschritt (30) ein Auswählen mehrerer Kommunikationsvorrichtungen einschließt.

7. Verfahren gemäß Anspruch 6, weiter umfassend einen Schritt des Wählens einer der mehreren Kommunikationsvorrichtungen, wobei der Wahlschritt auf Grundlage des Maximalbetrags des Empfängerrauschens durchgeführt wird, das für die mindestens eine Kommunikationsvorrichtung in dem Schritt des Definierens definiert wurde.

8. Verfahren gemäß Anspruch 7, wobei der Einstellschritt (35) ein Einstellen der Empfängerempfindlichkeit nur auf Grundlage der gewählten Kommunikationsvorrichtung einschließt, wobei das Einstellen durchgeführt wird, um die mehreren Kommunikationsvorrichtungen zu empfangen.

9. Verfahren gemäß Anspruch 6, wobei der Einstellschritt (35) ein Einstellen der Empfängerempfindlichkeit auf Grundlage einer der mehreren Kommunikationsvorrichtungen zu einem gegebenen Zeitpunkt einschließt.

10. Verfahren gemäß Anspruch 2, wobei der Nachstellschritt (36) ein Maximieren der Empfängerempfindlichkeit einschließt.

11. Verfahren gemäß Anspruch 1, weiter umfassend einen Schritt des Bestimmens einer Sendeleistung für die eigene Sendung.

12. Verfahren gemäß Anspruch 11, wobei der Nachstellschritt (36) einen Teilschritt des Bestimmens einer Empfängerempfindlichkeit auf Grundlage der bestimmten Sendeleistung einschließt.

13. Verfahren gemäß Anspruch 12, weiter umfassend die Schritte des
- Bestimmens der Verfügbarkeit des gemeinsamen Funkmediums unter Verwendung der Empfindlichkeit, die in dem Bestimmungs-Teilschritt bestimmt wurde; und
- Durchführens der eigenen Sendung.

14. Verfahren nach Anspruch 1, weiter umfassend einen Schritt des Definierens von Störleistung, die in dem Kommunikationsendgerät (120) empfangen wurde, wobei die Störleistung ein Störniveau angibt, das durch externe Störer verursacht wird.

15. Verfahren nach Anspruch 14, wobei die Einstell- und Nachstellschritte ein Einstellen des Dynamikbereichs des Empfängers einschließen.

16. Verfahren nach Anspruch 14, wobei der Schritt des Definierens ein Definieren der Co-Kanal-Gesamtleistung einschließt.

17. Verfahren nach Anspruch 14, wobei der Schritt des Definierens ein Definieren der Zwischenmodulationsleistung einschließt.

18. Verfahren nach Anspruch 14, wobei der Schritt des Definierens ein Definieren der Leistung eines benachbarten Kanals einschließt.

19. Verfahren nach Anspruch 15, weiter umfassend einen Schritt des Bestimmens eines vorrichtungsspezifischen Signal/Störungsverhältnisses für jede der mindestens einen Kommunikationsvorrichtung, wobei jedes vorrichtungsspezifische Signal/Störungsverhältnis einen Signal/Störungsverhältniswert angibt, der erforderlich ist, um die betreffende Kommunikationsvorrichtung zu empfangen.

20. Verfahren gemäß Anspruch 19, wobei der Einstellschritt ein Einstellen des Dynamikbereichs auf Grundlage der Störleistung, die in dem Schritt des Definierens definiert wurde, und des vorrichtungsspezifischen Signal/Störverhältnisses von einer der mindestens einen Kommunikationsvorrichtung einschließt.

21. Verfahren gemäß Anspruch 1, wobei der Auswahlschritt (30) ein Auswählen eines Zugangspunkts als den kommunizierenden Teilnehmer einschließt.

22. Verfahren gemäß Anspruch 1, wobei der Auswahlschritt (30) ein Auswählen mindestens eines anderen drahtlosen Kommunikationsendgeräts als den kommunizierenden Teilnehmer einschließt.

23. Verfahren gemäß Anspruch 4, wobei der Bestimmungsschritt ein Bestimmen des vorrichtungsspezifischen Signal/Rauschverhältnisses für jede der mindestens einen Kommunikationsvorrichtung durch Berechnen eines minimalen Signal/Rauschverhältnisses für jede der mindestens einen drahtlosen Kommunikationsvorrichtung und Hinzfügen eines vorbestimmten Sicherheitszuschlags auf das minimale Signal/Rauschverhältnis einschließt.

24. Verfahren gemäß Anspruch 19, wobei der Bestimmungsschritt ein Bestimmen des vorrichtungsspezifischen Signal/Störungsverhältnisses für jede der mindestens einen Kommunikationsvorrichtung durch Berechnen eines minimalen Signal/Störungsverhältnisses für jede der mindestens einen drahtlosen Kommunikationsvorrichtung und Hinzfügen eines vorbestimmten Sicherheitszuschlags auf das minimale Signal/Störungsverhältnis einschließt.

25. Verfahren gemäß Anspruch 1, wobei der Einstellschritt (35) mindestens einen Vorgang einschließt, aus einer Gruppe die Verringern eines Vorspannungsstroms, Verringern einer Versorgungsspannung und Umgehen einer ausgewählten Empfängerstufe einschließt.

26. Verfahren gemäß Anspruch 1, wobei der Einstellschritt (35) einen Teilschritt des Steuern einiger Empfängerblöcke einschließt, wobei jeder Block getrennt gesteuert wird.

27. Verfahren gemäß Anspruch 26, wobei der Steuer-Teilschritt ein Abrufen von Steuerinformationen für jeden Block aus einer Nachschlagetabelle (55) einschließt.

28. Verfahren gemäß Anspruch 26, wobei der Steuer-Teilschritt ein Berechnen von Steuerinformationen einschließt, um den Stromverbrauch zu minimieren.

29. Verfahren gemäß Anspruch 1, wobei der Messschritt (33) ein Messen der Variablen der Signalqualität von jeder der mindestens einen Kommunikationsvorrichtung einschließt, und wobei jede Variable der Signalqualität eine Fehlerrate eines Signals angibt, das von der entsprechenden Kommunikationsvorrichtung empfangen wurde.

30. Drahtloses Kommunikationsendgerät (120) für ein drahtloses Kommunikationssystem, wobei das drahtlose Kommunikationsendgerät (120) umfasst:
- Auswahlmittel (51, 83) zum Auswählen mindestens einer Kommunikationsvorrichtung als ein kommunizierender Teilnehmer in dem Kommunikationssystem;
- erste Messmittel (50) zum Messen einer Variablen einer Signalqualität von mindestens einer der mindestens einen Kommunikationsvorrichtung, wobei jede Variable der Signalqualität auf Grundlage eines Signals gemessen wird, das von einer jeweiligen der mindestens einen Kommunikationsvorrichtung empfangen wurde, wobei mindestens eine Variable der Signalqualität erhalten wird;
- erste Leistungssteuerungsmittel (52, 83) zum Einstellen einer Empfängerleistung basierend auf mindestens einer der mindestens einen Variablen der Signalqualität, um es dadurch dem drahtlosen Kommunikationsendgerät (120) zu erlauben, jeweilige Signale von der mindestens einen Kommunikationsvorrichtung mit einem verringerten Stromverbrauch zu empfangen;
- Überwachungsmittel (51, 83) zum Überwachen, ob eine eigene Sendung des drahtlosen Kommunikationsendgeräts (120) bevorsteht, und
- zweite Leistungssteuerungsmittel (52, 83) zum Einstellen der Empfängerleistung auf ein Leistungsniveau, das es dem Endgerät (120) ermöglicht, sendende Kommunikationsvorrichtungen innerhalb einer Reichweite der eigenen Sendung zu erfassen, wobei die zweiten Leistungssteuerungsmittel (52, 83) konfiguriert sind, um betrieben zu werden, wenn die Überwachungsmittel (51, 83) angeben, das die eigene Sendung bevorsteht.

31. Drahtloses Kommunikationsendgerät (120) gemäß Anspruch 30, wobei die ersten und zweiten Leistungssteuerungsmittel (52, 83) konfiguriert sind, eine Empfängerempfindlichkeit zu steuern.

32. Drahtloses Kommunikationsendgerät (120) gemäß Anspruch 31, wobei die mindestens eines Variable der Signalqualität eine Signalstärke angibt.

33. Drahtloses Kommunikationsendgerät (120) gemäß Anspruch 32, weiter umfassend Berechnungsmittel (51, 83) zum Berechnen eines vorrichtungsspezifischen Signal/Rauschverhältnisses für jede der mindestens einen Kommunikationsvorrichtung, und wobei jedes der vorrichtungsspezifischen Signal/Rauschverhältnisse ein Signal/Rauschverhältniswert angibt, der erforderlich ist, um die betreffende Kommunikationsvorrichtung zu empfangen.

34. Drahtloses Kommunikationsendgerät (120) gemäß Anspruch 33, wobei die ersten Leistungssteuerungsmittel (52, 83) konfiguriert sind, einen Maximalbetrag des Empfängerrauschens, das für jede der mindestens einen Kommunikationsvorrichtung gestattet ist, zu definieren, auf Grundlage des vorrichtungsspezifischen Signal/Rauschverhältnisses, das für diese Vorrichtung bestimmt wurde, und auf der empfangenen Signalstärke, die für die Vorrichtung gemessen wurde.

35. Drahtloses Kommunikationsendgerät (120) gemäß Anspruch 31, wobei die ersten Leistungssteuerungsmittel weiter konfiguriert sind, eine der mindestens einen Kommunikationsvorrichtung zu wählen, und eine Empfängerempfindlichkeit auf Grundlage des Maximalbetrags des Empfängerrauschens einzustellen, der für diese Kommunikationsvorrichtung gestattet ist.

36. Drahtloses Kommunikationsendgerät (120) gemäß Anspruch 31, wobei die zweiten Leistungssteuerungsmittel (52, 83) konfiguriert sind, die Empfängerempfindlichkeit zu maximieren, falls die eigene Sendung des drahtlosen Kommunikationsendgeräts (120) bevorsteht.

37. Drahtloses Kommunikationsendgerät (120) gemäß Anspruch 31, wobei die zweiten Leistungssteuerungsmittel (52, 83) konfiguriert sind, die Empfängerempfindlichkeit auf Grundlage von Sendeleistung zu bestimmen, die für die eigene Sendung definiert ist.

38. Drahtloses Kommunikationsendgerät (120) gemäß Anspruch 30, wobei die ersten Leistungssteuerungsmittel (52, 83) mit einer Nachschlagetabelle (55) versehen sind, die zu ergreifende interne Steuermaßnamen angibt.

39. Drahtloses Kommunikationsendgerät (120) gemäß Anspruch 30, wobei die zweiten Leistungssteuerungsmittel (52, 83) mit einer Nachschlagetabelle (55) versehen sind, die zu ergreifende interne Steuermaßnamen angibt.

40. Drahtloses Kommunikationsendgerät (120) gemäß Anspruch 30, weiter umfassend zweite Messmittel zum Messen von Störleistung, die an dem Kommunikationsendgerät (120) empfangen wird, wobei die Störleistung ein Störniveau angibt, das durch externe Störer verursacht wird.

41. Drahtloses Kommunikationsendgerät (120) gemäß Anspruch 40, wobei die ersten und zweiten Leistungssteuerungsmittel (52, 83) konfiguriert sind, den Dynamikbereich des Empfängers zu steuern.

42. Drahtloses Kommunikationsendgerät (120) gemäß Anspruch 41, wobei die ersten Leistungssteuerungsmittel (52, 83) weiter konfiguriert sind, eine der mindestens einen Kommunikationsvorrichtung zu wählen, und um den Dynamikbereich auf Grundlage der Störleistung und der Variablen der Signalqualität einzustellen, die der gewählten Vorrichtung entsprechen.

43. Drahtloses Kommunikationsendgerät (120) gemäß Anspruch 30, wobei die mindestens eine Variable der Signalqualität eine Fehlerrate eines Signals angibt, das von der entsprechenden Kommunikationsvorrichtung gemessen wurde.

44. Computerverwendbares Medium (85) mit computerlesbarem Programmcode darauf, um ein drahtloses Kommunikationsendgerät (120) zu steuern, wobei der computerlesbare Programmcode umfasst:
- einen ersten computerlesbaren Programmcodeabschnitt, um die mindestens eine Kommunikationsvorrichtung zu veranlassen, als ein kommunizierender Teilnehmer für das drahtlose Kommunikationsendgerät (120) ausgewählt zu werden;
- einen zweiten computerlesbaren Programmcodeabschnitt, um das drahtlose Kommunikationsendgerät (120) zu veranlassen, eine Empfängerleistung auf Grundlage einer Variablen einer Signalqualität einzustellen, die auf Grundlage eines Signals gemessen wurde, das von mindestens einer der mindestens einen drahtlosen Kommunikationsvorrichtung empfangen wurde,
- einen dritten computerlesbaren Programmcodeabschnitt, um das drahtlose Kommunikationsendgerät (120) zu veranlassen, eine Angabe zu erzeugen, wenn die eigene Sendung des drahtlosen Kommunikationsendgeräts (120) bevorsteht, und
- einen vierten computerlesbaren Programmcodeabschnitt, um das drahtlose Kommunikationsendgerät (120) zu veranlassen, die Empfängerleistung auf ein Niveau einzustellen, das es dem drahtlosen Kommunikationsendgerät (120) ermöglicht, sendende Kommunikationsvorrichtungen innerhalb einer Reichweite der eigenen Sendung zu erfassen, wobei der vierte computerlesbare Programmcodeabschnitt in Reaktion auf die Angabe betrieben wird, dass die eigene Sendung bevorsteht.

## Revendications

1. Procédé destiné à diminuer la consommation d'énergie dans un terminal de communication sans fil (120), le procédé comprenant les étapes ci-dessous consistant à :
- sélectionner (30) au moins un dispositif de communication en tant qu'une entité homologue communicante dans un système de communication sans fil ;
- mesurer (33) une variable de qualité de signal à partir d'au moins l'un dudit au moins un dispositif de communication sélectionné à l'étape de sélection, chaque variable de qualité de signal étant mesurée sur la base d'un signal reçu à partir de l'un respectif dudit au moins un dispositif de communication sélectionné à l'étape de sélection, moyennant quoi au moins une variable de qualité de signal est obtenue ;
- ajuster (35) les performances de récepteur sur la base d'au moins l'une de ladite au moins une variable de qualité de signal obtenue à l'étape de mesure, l'étape d'ajustement étant mise en oeuvre en vue de réduire la consommation d'énergie tout en assurant la réception de signaux respectifs à partir dudit au moins un dispositif de communication sélectionné à l'étape de sélection ;
- contrôler (32) si la propre transmission du terminal de communication sans fil de (120) se rapproche ; et
- réajuster (36) les performances de récepteur en vue de déterminer la disponibilité d'un support hertzien commun à un niveau de performances permettant la détection de dispositifs de communication émetteurs dans une zone de couverture de ladite propre transmission, l'étape de réajustement étant mise en oeuvre lorsque l'étape de contrôle indique que ladite propre transmission se rapproche.

2. Procédé selon la revendication 1, dans lequel les étapes d'ajustement et de réajustement (33, 36) comprennent l'étape consistant à ajuster la sensibilité de récepteur.

3. Procédé selon la revendication 1, dans lequel l'étape de mesure (33) comprend la mesure de la variable de qualité de signal à partir de chacun dudit au moins un dispositif de communication, et dans lequel chaque variable de qualité de signal mesurée indique une force de signal reçue à partir du dispositif de communication correspondant.

4. Procédé selon la revendication 3, comprenant en outre une étape consistant à déterminer un rapport signal sur bruit spécifique au dispositif pour chacun dudit au moins un dispositif de communication, chaque rapport signal sur bruit spécifique au dispositif indiquant une valeur de rapport signal sur bruit requise pour écouter le dispositif de communication concerné.

5. Procédé selon la revendication 4, comprenant en outre une étape consistant à définir une quantité maximale de bruit de récepteur autorisée pour chacun dudit au moins un dispositif de communication, dans lequel la quantité maximale de bruit de récepteur autorisée pour un dispositif de communication est définie sur la base du rapport signal sur bruit minimum déterminé pour ce dispositif à l'étape de détermination, et de la force de signal reçu mesurée pour ce dispositif à l'étape de mesure.

6. Procédé selon la revendication 5, dans lequel l'étape de sélection (30) comprend la sélection dune pluralité de dispositifs de communication.

7. Procédé selon la revendication 6, comprenant en outre une étape consistant à choisir l'un de la pluralité de dispositifs de communication, l'étape consistant à choisir étant mise en oeuvre sur la base de la quantité maximale de bruit de récepteur définie pour ledit au moins un dispositif de communication à l'étape de définition.

8. Procédé selon la revendication 7, dans lequel l'étape d'ajustement (35) comprend l'ajustement de la sensibilité de récepteur sur la base du dispositif de communication choisi uniquement, l'ajustement étant mis en oeuvre en vue d'écouter ladite pluralité de dispositifs de communication.

9. Procédé selon la revendication 6, dans lequel l'étape d'ajustement (35) comprend l'ajustement de la sensibilité de récepteur sur la base de l'un de la pluralité de dispositifs de communication à la fois.

10. Procédé selon la revendication 2, dans lequel l'étape de réajustement (36) comprend l'étape consistant à maximiser la sensibilité de récepteur.

11. Procédé selon la revendication 1, comprenant en outre une étape consistant à déterminer la puissance de transmission pour ladite propre transmission.

12. Procédé selon la revendication 11, dans lequel l'étape de réajustement (36) comprend une sous-étape consistant à déterminer la sensibilité de récepteur sur la base de la puissance de transmission déterminée.

13. Procédé selon la revendication 12, comprenant en outre les étapes ci-dessous consistant à :
- déterminer la disponibilité du support hertzien commun en utilisant la sensibilité déterminée dans la sous-étape de détermination ; et
- mettre en oeuvre ladite propre transmission.

14. Procédé selon la revendication 1, comprenant en outre une étape consistant à définir la puissance de brouillage reçue dans le terminal de communication (120), la puissance de brouillage indiquant un niveau de brouillage occasionné par des brouilleurs externes.

15. Procédé selon la revendication 14, dans lequel les étapes d'ajustement et de réajustement comprennent l'étape consistant à ajuster la plage dynamique du récepteur.

16. Procédé selon la revendication 14, dans lequel l'étape de définition comprend la définition de la puissance de canal commun totale.

17. Procédé selon la revendication 14, dans lequel l'étape de définition comprend la définition de la puissance d'intermodulation.

18. Procédé selon la revendication 14, dans lequel l'étape de définition comprend la définition de la puissance d'un canal adjacent.

19. Procédé selon la revendication 15, comprenant en outre une étape consistant à déterminer un rapport signal sur brouillage spécifique au dispositif pour chacun dudit au moins un dispositif de communication, chaque rapport signal sur brouillage spécifique au dispositif indiquant une valeur de rapport signal sur brouillage requise en vue d'écouter le dispositif de communication concerné.

20. Procédé selon la revendication 19, dans lequel l'étape d'ajustement comprend l'ajustement de la plage dynamique sur la base de la puissance de brouillage définie à l'étape de définition, et du rapport signal sur brouillage spécifique au dispositif de l'un dudit au moins un dispositif de communication.

21. Procédé selon la revendication 1, dans lequel l'étape de sélection (30) comprend la sélection d'un point d'accès en tant que l'entité homologue communicante.

22. Procédé selon la revendication 1, dans lequel l'étape de sélection (30) comprend la sélection d'au moins un autre terminal de communication sans fil en tant que l'entité homologue communicante.

23. Procédé selon la revendication 4, dans lequel l'étape de détermination comprend la détermination du rapport signal sur bruit spécifique au dispositif pour chacun dudit au moins un dispositif de communication, en calculant un rapport signal sur bruit minimum pour chacun dudit au moins un dispositif de communication sans fil et en ajoutant une marge de sécurité prédéterminée au rapport signal sur bruit minimum.

24. Procédé selon la revendication 19, dans lequel l'étape de détermination comprend la détermination du rapport signal sur brouillage spécifique au dispositif pour chacun dudit au moins un dispositif de communication, en calculant un rapport signal sur brouillage minimum pour chacun dudit au moins un dispositif de communication sans fil, et en ajoutant une marge de sécurité prédéterminée au rapport signal sur brouillage minimum.

25. Procédé selon la revendication 1, dans lequel l'étape d'ajustement (35) comprend au moins une opération parmi un groupe comprenant la réduction d'un courant de polarisation, la réduction d'une tension d'alimentation, et la dérivation d'un étage de récepteur sélectionné.

26. Procédé selon la revendication 1, dans lequel l'étape d'ajustement (35) comprend une sous-étape consistant à commander de multiples blocs de récepteur, chaque bloc étant commandé séparément.

27. Procédé selon la revendication 26, dans lequel la sous-étape de commande comporte la récupération des informations de commande pour chaque bloc à partir d'une table de consultation (55).

28. Procédé selon la revendication 26, dans lequel la sous-étape de commande comprend le calcul des informations de commande en vue de minimiser la consommation d'énergie.

29. Procédé selon la revendication 1, dans lequel l'étape de mesure (33) comprend la mesurede la variable de qualité de signal à partir de chacun dudit au moins un dispositif de communication, et dans lequel chaque variable de qualité de signal indique un taux d'erreur d'un signal reçu à partir du dispositif de communication correspondant.

30. Terminal de communication sans fil (120) pour un système de communication sans fil, le terminal de communication sans fil (120) comprenant :
- un moyen de sélection (51, 83) pour sélectionner au moins un dispositif de communication en tant qu'une entité homologue communicante dans le système de communication ;
- un premier moyen de mesure (50) pour mesurer une variable de qualité de signal à partir d'au moins l'un dudit au moins un dispositif de communication, chaque variable de qualité de signal étant mesurée sur la base d'un signal reçu à partir de l'un respectif dudit au moins un dispositif de communication, moyennant quoi au moins une variable de qualité de signal est obtenue ;
- un premier moyen de commande de performances (52, 83) pour ajuster les performances de récepteur sur la base d'au moins l'une de ladite au moins une variable de qualité de signal, en vue de permettre par conséquent au terminal de communication sans fil (120) de recevoir des signaux respectifs, en provenance dudit au moins un dispositif de communication, avec une consommation d'énergie réduite ;
- un moyen de surveillance (51, 83) pour contrôler si la propre transmission du terminal de communication sans fil de (120) se rapproche ; et
- un second moyen de commande de performances (52, 83) pour ajuster les performances de récepteur à un niveau de performances permettant au terminal (120) de détecter des dispositifs de communication émetteurs dans une zone de couverture de ladite propre transmission, le second moyen de commande de performances (52, 83) étant configuré de manière à opérer lorsque le moyen de surveillance (51, 83) indique que ladite propre transmission se rapproche.

31. Terminal de communication sans fil (120) selon la revendication 30, dans lequel les premier et second moyens de commande de performances (52, 83) sont configurés de manière à commander la sensibilité de récepteur.

32. Terminal de communication sans fil (120) selon la revendication 31, dans lequel ladite au moins une variable de qualité de signal indique une force de signal.

33. Terminal de communication sans fil (120) selon la revendication 32, comprenant en outre un moyen de calcul (51, 83) pour calculer un rapport signal sur bruit spécifique au dispositif pour chacun dudit au moins un dispositif de communication, chaque rapport signal sur bruit spécifique au dispositif indiquant une valeur de rapport signal sur bruit requise en vue d'écouter le dispositif de communication concerné.

34. Terminal de communication sans fil (120) selon la revendication 33, dans lequel le premier moyen de commande de performances (52, 83) est configuré de manière à définir une quantité maximale de bruit de récepteur autorisée pour chacun dudit au moins un dispositif de communication, sur la base du rapport signal sur bruit spécifique au dispositif déterminé pour ce dispositif et de la force de signal reçue mesurée pour ce dispositif.

35. Terminal de communication sans fil (120) selon la revendication 31, dans lequel le premier moyen de commande de performances est en outre configuré de manière à choisir l'un dudit au moins un dispositif de communication et à ajuster la sensibilité de récepteur sur la base de la quantité maximale de bruit de récepteur autorisée pour ce dispositif.

36. Terminal de communication sans fil (120) selon la revendication 31, dans lequel le second moyen de commande de performances (52, 83) est configuré de manière à optimiser la sensibilité de récepteur si la propre transmission du terminal de communication sans fil (120) se rapproche.

37. Terminal de communication sans fil (120) selon la revendication 31, dans lequel le second moyen de commande de performances (52, 83) est configuré de manière à déterminer la sensibilité de récepteur sur la base de la puissance de transmission définie pour ladite propre transmission.

38. Terminal de communication sans fil (120) selon la revendication 30, dans lequel le premier moyen de commande de performances (52, 83) est doté d'une table de consultation (55) indiquant des mesures de commande interne à mettre en oeuvre.

39. Terminal de communication sans fil (120) selon la revendication 30, dans lequel le second moyen de commande de performances (52, 83) est doté d'une table de consultation (55) indiquant des mesures de commande interne à mettre en oeuvre.

40. Terminal de communication sans fil (120) selon la revendication 30, comprenant en outre un second moyen de mesure pour mesurer la puissance de brouillage reçue dans le terminal de communication (120), la puissance de brouillage indiquant un niveau de brouillage occasionné par des brouilleurs externes.

41. Terminal de communication sans fil (120) selon la revendication 40, dans lequel les premier et second moyens de commande de performances (52, 83) sont configurés de manière à commander la plage dynamique de récepteur.

42. Terminal de communication sans fil (120) selon la revendication 41, dans lequel le premier moyen de commande de performances (52, 83) est en outre configuré de manière à choisir l'un dudit au moins un dispositif de communication, et à ajuster la plage dynamique sur la base de la puissance de brouillage et de la variable de qualité de signal correspondant au dispositif choisi.

43. Terminal de communication sans fil (120) selon la revendication 30, dans lequel ladite au moins une variable de qualité de signal indique un taux d'erreur d'un signal mesuré à partir du dispositif de communication correspondant.

44. Support utilisable par un ordinateur (85) présentant un code de programme lisible par ordinateur intégré dans celui-ci en vue de commander un terminal de communication sans fil (120), le code de programme lisible par ordinateur comprenant :
- une première partie de code de programme lisible par ordinateur pour amener au moins un dispositif de communication à être sélectionné en tant qu'entité homologue communicante pour le terminal de communication sans fil (120) ;
- une deuxième partie de code de programme lisible par ordinateur pour amener le terminal de communication sans fil (120) à ajuster les performances de récepteur sur la base d'une variable de qualité de signal mesurée sur la base d'un signal reçu à partir d'au moins un dudit au moins un dispositif de communication sans fil ;
- une troisième partie de code de programme lisible par ordinateur pour amener le terminal de communication sans fil (120) à générer une indication lorsque la propre transmission du terminal de communication sans fil (120) se rapproche ; et
- une quatrième partie de code de programme lisible par ordinateur pour amener le terminal de communication sans fil (120) à ajuster les performances de récepteur à un niveau permettant au terminal de communication sans fil (120) de détecter des dispositifs de communication émetteurs dans une zone de couverture de ladite propre transmission, la quatrième partie de code de programme lisible par ordinateur opérant en réponse à l'indication selon laquelle ladite propre transmission se rapproche.
